# EUROPEAN PATENT SPECIFICATION

(11) **EP 3 806 398 B1**
(45) Date of publication and mention of the grant of the patent: **10.05.2023**
(21) Application number: 20199429.0
(22) Date of filing: 30.09.2020
(51) Int. Cl.: H04L 12/28, H04L 41/082, H04N 17/04, H04N 21/443, H04N 21/4425

(54) **SMART TV REMOTE MAINTENANCE METHOD**
VERFAHREN ZUR FERNWARTUNG VON INTELLIGENTEM FERNSEHEN
PROCÉDÉ DE MAINTENANCE À DISTANCE DE TÉLÉVISION INTELLIGENTE

(30) Priority: 07.10.2019 TR 201915283
(43) Date of publication of application: 14.04.2021
(73) Proprietor: Arçelik Anonim Sirketi, 34445 Istanbul (TR)
(72) Inventor: KAYAHAN, Dilek, 34950 Istanbul (TR); DIRIL, Gizem, 34950 Istanbul (TR); UZUMCUOGLU, Anil, 34950 Istanbul (TR)

(56) References cited:
- EP-A1- 2 748 968
- US-A1- 2014 049 651
- US-A1- 2016 285 956
- US-A1- 2019 196 430

## Description

The present invention relates to a remote maintenance method for smart televisions.

Smart televisions, by means of integrated Internet and interactive features provided therein, allow reporting and remote handling of various issues relating to the television without requiring on-site service. Typically, a user contacts a remote agent, for example a call centre technician, to report an issue and to receive maintenance support in response.

In cases where the issue is obvious and can be instantly resolved, the remote agent may remotely connect to the smart television upon user's consent to gain direct control thereon, detect the fault causing the issue, apply necessary adjustments or updates on the device and resolve the issue in a few minutes. Updating list of channels, adjustments in colour and audio can generally be completed relatively quickly. In certain cases, however, the fault may be difficult to detect and may require monitoring the issue for an extended time. Faults occurring after the television is active for hours, or those popping randomly cannot be resolved immediately. It is also possible that the user prefers a maintenance scheduled for a later time rather than an instant intervention by the agent. Under such circumstances, trying to remotely detect a fault and resolve the issue right away causes inconvenience for the user. It is also likely that the user and the agent may need to stay on the line for a long period, which is quite inefficient for the time of the user and the technician alike. Furthermore, when the agent is connected to the smart television to monitor a fault, the user cannot use the television, which is quite annoying for the user.

In the state of the art, international patent application WO2017201897 discloses a method and device for collecting fault information of smart television. The log files of the smart television are constantly monitored and when abnormality with the television system is determined, the log files are uploaded to a server in order to detect faults in the television the first time they occur.

In the state of the art, United States Patent Application no. US2016285956 discloses aremoting application user interfaces to user devices.

Chinese Patent Application CN105120339 discloses a similar fault detection method for a smart television. When a fault is detected by a diagnosis module of the television, fault information is uploaded to a server and displayed to a user.

The aim of the present invention is the realization of a remote maintenance method and system for smart televisions wherein inconvenience of the user during maintenance is prevented. Another purpose is providing a remote maintenance service which is adaptive to different types of issues reported by a user and user's personal preferences regarding the service. A related purpose is realization of a remote maintenance method and system wherein the time the maintenance takes is minimised both for the user's and the remote agent.

The aim of the present invention is achieved by the remote maintenance method explicated in claim 1 and the remote maintenance system explicated in claim 12.

Further achievements have been attained by the subject-matters respectively defined in the dependent claims.

The remote maintenance method for a smart television comprises: starting a remote access session between the smart television and a remote server connected to the smart television; submitting, to the server, an issue relating to the smart television; assigning a category to the submitted issue, the assigned category indicating whether an instant maintenance or a deferred maintenance is to be performed on the smart television; if the assigned category indicates a deferred maintenance, creating, at the server, at least one deferred maintenance routine by setting parameters for the routine; sending said parameters from the server to the smart television; triggering the at least one deferred maintenance routine on the smart television according to received parameters; notifying user of the smart television about the results; and reporting log files obtained during the routine to the server when the routine is complete.

In a preferred embodiment, deferred maintenance category is assigned to the issue if the issue requires monitoring the smart television for an extended time. Additionally or alternatively, deferred maintenance category may be assigned to the issue if user of the smart television requests that the maintenance is carried out at a specified time.

The parameters set for the routine preferably comprise timing information for executing the routine. The timing information may comprise one or more of: a start time when the routine will be triggered, an end time when the routine will be completed, and a duration for which the routine will be run on the smart television. The timing information may be determined, for example by a remote agent, according to a request submitted by the user of the smart television.

The parameters for the routine may further comprise log types to be monitored during the routine; such as audio, video, broadcast, application, and/or menu. The parameters may comprise one or more of: type of notification, automatic remote access preference, and a notification message to be provided when the routine is complete.

In some embodiments, the method further comprises asking for user's permission to perform the routine on the smart television, before triggering the routine.

The routine may be considered complete when at least one fault regarding the issue is detected, at a specified end time, and/or at the end a of a set duration.

The remote server may be operated by a technician, for example located at a call centre.

The remote maintenance system comprises a smart television with a front-end application, and a remote server with a back-end application. Said applications are configured to: start a remote access session between the smart television and the remote server; submit, to the server, an issue relating to the smart television; assign a category to the submitted issue, the assigned category indicating whether an instant maintenance or a deferred maintenance is to be performed on the smart television; create, at the server, if the assigned category indicates a deferred maintenance, at least one deferred maintenance routine by setting parameters for the routine; send said parameters from the server to the smart television; trigger the at least one deferred maintenance routine on the smart television according to received parameters; notify user of the smart television about the results; and report log files obtained during the routine to the server when the routine is complete.

According to a further aspect of the invention, there is provided a computer program comprising instructions for performing the remote maintenance method described above.

With the proposed remote maintenance method and system, a maintenance routine which is to be performed on a smart television at a specified time or time interval can be created at a remote server, for example by a call center technician. Parameters defining the details of the routine are set by the remote agent, considering the characteristics of the reported issue and personal preferences of the user, for example with regard to timing when the maintenance routine will be run on the smart television. Thus, an enhanced remote maintenance solution is provided, wherein the commands to be executed on the television for monitoring and diagnostics purposes are defined by a remote agent.

In line with selected parameters, logging is carried out during automatic execution of the maintenance routine, preferably as a background process. In other words, the maintenance routine running on the smart television does not interfere with normal functionality of the television. The user can continue using the television without noticing the routine being executed.

When the routine comes to an end, for example by detecting at least one fault regarding the reported issue or according to predefined timing settings, the user is notified, and respective log files are sent to the server. Once the routine is complete, preferably a new remote access session between the television and the server is started, which can be triggered automatically depending on related parameters defined in the routine. In view of log files and other related information obtained, remote agent can take necessary actions to remotely resolve detected faults in the smart television.

The method and system for remote maintenance of a smart television realized in order to attain the aim of the present invention is illustrated in the attached figures, where:
Figure 1 is a flow diagram illustrating the remote maintenance method according to an embodiment,
Figure 2 is a schematic diagram illustrating the remote maintenance system according to an embodiment.

The elements illustrated in the figures are numbered as follows:
- 1.: Smart television
- 2.: Front-end application
- 3.: Remote server
- 4.: Back-end application

The remote maintenance method comprises starting a remote access session (101) between the smart television (1) and a remote server (3) connected to the smart television and submitting, to the server (3), an issue relating to the smart television (1) (102). The issue may be submitted by a user of the smart television (1) over the remote access session by inputting information via the television (1), as well as via other means, such as a telephone conversation or a real-time messaging with a remote agent, for example a technician located at a call centre.

In accordance with submitted issue, and possibly with further information provided by the user, a category is assigned to the submitted issue (103). This can be done by a remote technician by inputting information via a maintenance application interface. The category indicates the nature of the issue and the possible manner how it can be handled. More specifically, the assigned category indicates whether an instant maintenance or a deferred maintenance is to be performed on the smart television (1). Instant maintenance is mostly suitable for issue where one or more underlying faults are readily apparent to the remote agent, and can be resolved relatively quickly, for example in a couple of minutes. If the issue is of this category, typically the technician connects to the smart television in question and solves the issue. If, on the other hand, the assigned category indicates a deferred maintenance (104), at least one deferred maintenance routine (105) is created at the server (3) by setting parameters for the routine. This can also be carried out by the remote technician, by inputting information via the maintenance application interface. A deferred maintenance category may denote an issue which requires monitoring the smart television (1), in order to detect an underlying fault, for an extended time, for example at least in the order of tens of minutes, possibly longer than 30 minutes. By way of example, the issue may be a synchronization problem emerging after watching the television (1) for a few hours, or other faults occurring irregularly, for example at random times. Deferred maintenance category may also be assigned in case the user requests that the maintenance by the technician is carried out at a specified deferred time.

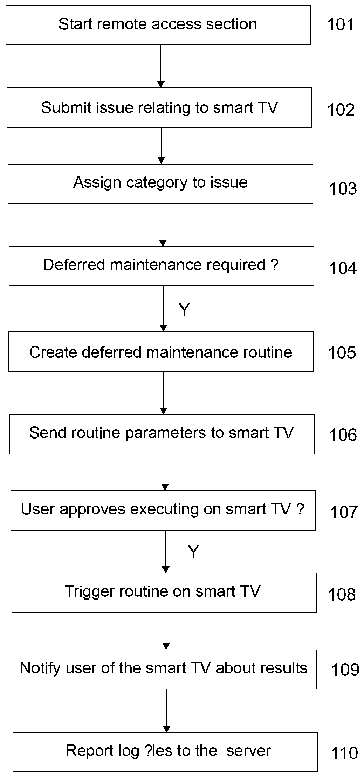

The deferred maintenance routine created at the remote server (3), particularly the parameters defining said routine, are sent to the smart television (1) (106). In accordance with those parameters, the routine is triggered on the smart television (1) (108) and starts running at least one logging process in order to diagnose one or more faults in connection with the issue, preferably in the background. When the routine is complete, the user is notified about results (109). The results may comprise information on whether any faults have been detected, and if so, about the types of faults detected and possibly further steps to be taken. Log files monitored and obtained during the routine are sent to the server (3) (110). (Figure 1)

In a preferred embodiment, the parameters defining a routine comprise timing information as to when and/or for how long the routine is to be executed on the smart television (1). The timing information may include a start time when the routine will be triggered. The timing information may include an end time when the routine will be completed or a duration for which the routine will be run. When determining the timing information as the routine is being created, specific wishes of the user may be taken into consideration in addition to or as an alternative to characteristics of the reported issue. For example, the user may request that the routine and/or the related maintenance is carried out of certain hours such as 'prime time', or such that it does not coincide with broadcasting time of a specific program, such as before or after a specified program or during a commercial break thereof.

The parameters may further comprise log types to be monitored during routine. The log types can be added to the routine by the remote technician by selecting log types that seem relevant to the reported issue from a predetermined number of log types, such as audio, video, broadcast, application, and menu.

The parameters may further comprise selection of at least one notification message, the type of notification, and/or automatic remote access preference when the routine is complete. By setting notification message in the parameters, the content of the message to be output is determined, for example by typing in the specific message or selecting one from a plurality of predetermined messages. The type of notification may be audio and/or visual, which can in accordance with user's preference. According to the selected type, notifications during and/or at the end of maintenance routine is provided to the user in the form of a display notification on the smart television (1) and/or as an audio notification played on audio outputs of the television (1). When the audio notification option is active, the output on the smart television (1) may be provided by converting a selected message text to speech. Automatic remote access indicates whether a user prefers automatically initiating a remote access with the server when the maintenance routine is over. When automatic remote access is enabled, a remote access is started when the monitoring process is complete. Otherwise, log files are sent to the remote server in the background and a remote access in order the handle detected faults may be scheduled for a later time.

The maintenance routine defined by parameters may comprises one or more commands to be executed on the smart television (1), such as turning up volume, switching to a next channel; preferably in a desired order. In some embodiments, when the routine is triggered, these commands are executed as defined by the routine and selected log types are monitored.

In at least one embodiment of the invention, the method comprises asking for user's permission to trigger the routine on the smart television (1) (107). This may be done by displaying a pop-up message on display of the television (1) asking whether starting the routine is approved by the user. In case a start time is defined in parameters, the message may be provided just before said start time. It is also possible that user's approval is asked as soon as selected parameters are received from the server (3). Upon user's approval, the routine may be triggered at the selected start time, or immediately if no start time is defined.

The routine may automatically come to an end, that is, stop being executed on the smart television (1) when at least one of the following conditions is fulfilled: at least one fault regarding the issue is detected, a specified end time is reached, and the routine has run for a set duration.

Above described steps of the maintenance method are typically initiated by a user of the smart television (1) on the client side or a remote technician on the server side (3), depending on each specific step. However, the method may be at least partially realised automatically according to preconfigured routines.

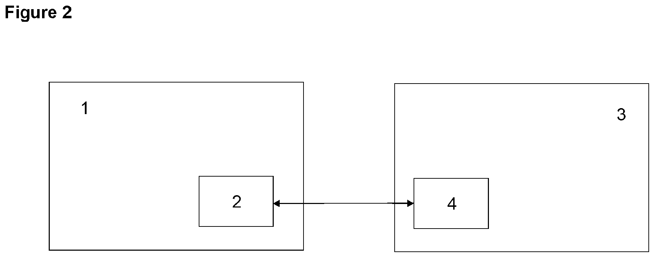

The present invention extends to a remote maintenance system comprising a smart television (1) with a front-end application (2), and a remote server (3) with a back-end application (4). (Figure 2) Said applications (2, 3) can be considered as parts of a single remote access application running on two remote devices, namely on a smart television (1) and a remote server (3), especially when a remote access session is active. The applications (2, 3) are configured to carry out the above described method steps, preferably in response to respective inputs from a user and a remote technician as required.

The invention further extends to a computer program comprising instructions for performing the remote maintenance method, and preferably to a non-transitory computer readable medium storing the computer program. The computer program preferably comprises software operable, when executed on a smart television (1) and a remote server (3) connected to the smart television (1), to cause one or more processors to perform the maintenance method.

As explained in the foregoing description, the remote maintenance method and system of the present invention proposes an optimal solution to different types of issues reported relating to a smart television (1). Particularly, a distinction is made between issues that can immediately be solved by a remote agent, and those requiring monitoring and diagnosis over an extended time window or a user prefers to be handled at a specified time. In the latter case, a deferred maintenance routine is programmed remotely and then sent to and performed on the smart television (1). Accordingly, the method and system provide an effective solution for handling issues that require a deferred maintenance, which in turn saves time both for a technician and a client, without compromising the quality of after sales service delivered to a user.

## Claims

1. A remote maintenance method for a smart television (1), the method comprising:
starting a remote access session (101) between the smart television (1) and a remote server (3) connected to the smart television;
submitting, to the server (3), an issue relating to the smart television (1) (102);
assigning a category to the submitted issue (103), the assigned category indicating whether an instant maintenance or a deferred maintenance is to be performed on the smart television (1);
if the assigned category indicates a deferred maintenance (104), creating, at the server (3), at least one deferred maintenance routine (105) by setting parameters for the routine;
sending said parameters from the server (3) to the smart television (1) (106);
triggering the at least one deferred maintenance routine on the smart television (1) (108) according to received parameters;
notifying user of the smart television (1) about the results (109); and
reporting log files obtained during the routine to the server (3) (110) when the routine is complete;
wherein a deferred maintenance category is assigned to the issue if the issue requires monitoring the smart television (1) for an extended time.

2. The remote maintenance method according to claim 1, wherein the parameters comprise timing information for executing the routine.

3. The remote maintenance method according to claim 2, wherein the timing information comprises a start time when the routine will be triggered.

4. The remote maintenance method according to claim 2 or 3 wherein the timing information further comprises an end time when the routine will be completed or a duration for which the routine will be run on the smart television (1).

5. The remote maintenance method according to any one of claims 2 to 4 wherein the timing information is determined according to a request submitted by the user of the smart television (1).

6. The remote maintenance method according to any one of preceding claims, wherein the parameters further comprise log types to be monitored during routine.

7. The remote maintenance method according to claim 6, wherein the log types comprise at least one of audio, video, broadcast, application, and menu.

8. The remote maintenance method according to any one of preceding claims, wherein the parameters further comprise one or more of: type of notification, automatic remote access preference, and a notification message to be provided when the routine is complete.

9. The remote maintenance method according to any one of preceding claims, wherein the method further comprises, before triggering the routine, asking for user's permission to perform the routine on the smart television (1) (107).

10. The remote maintenance method according to any one of preceding claims, wherein the routine is complete when at least one fault regarding the issue is detected, at a specified end time, or at the end a of a set duration.

11. The remote maintenance method according to any one of preceding claims, wherein the server is operated by a technician.

12. A remote maintenance system comprising a smart television (1) with a front-end application (2), and a remote server (3) with a back-end application (4), said applications being configured to:
start a remote access session between the smart television (1) and the remote server (3); submit, to the server (3), an issue relating to the smart television (1);
assign a category to the submitted issue, the assigned category indicating whether an instant maintenance or a deferred maintenance is to be performed on the smart television (1);
create, at the server (3), if the assigned category indicates a deferred maintenance, at least one deferred maintenance routine by setting parameters for the routine;
send said parameters from the server (3) to the smart television (1); trigger the at least one deferred maintenance routine on the smart television (1) according to received parameters;
notify user of the smart television (1) about the results (109); and
report log files obtained during the routine to the server (3) when the routine is complete. complete, wherein a deferred maintenance category is assigned to the issue if the issue requires monitoring the smart television (1) for an extended time.

13. Computer program comprising instructions for performing a method according to any one of claims 1 to 1.

## Patentansprüche

1. Ein Fernwartungsverfahren für ein Smart-TV (1) **umfasst** folgende Verfahren: Beginnen einer Fernzugriffssitzung (101) zwischen dem Smart-TV (1) und einem entfernten Server (3), der mit dem Smart-TV verbunden ist; Senden eines Problems bezüglich des Smart-TV (1) (102) an den Server (3); Zuweisen einer Kategorie zu dem eingereichten Problem (103), wobei die zugewiesene Kategorie angibt, ob eine sofortige Wartung oder eine verzögerte Wartung an dem Smart-TV (1) durchzuführen ist; wenn die zugewiesene Kategorie eine verzögerte Wartung (104) anzeigt, Erstellen mindestens einer verzögerten Wartungsroutine (105) auf dem Server (3) durch Setzen von Parametern für die Routine; Senden der Parameter vom Server (3) zum Smart-TV (1) (106); Auslösen der mindestens einen verzögerten Wartungsroutine auf dem Smart-TV (1) (108) gemäß empfangenen Parametern; Benachrichtigen des Benutzers des Smart-TV (1) über die Ergebnisse (109); und Melden von Protokolldateien, die während der Routine erhalten wurden, an den Server (3) (110), wenn die Routine abgeschlossen ist; wobei dem Problem eine verzögerte Wartungskategorie zugewiesen wird, wenn das Problem eine Überwachung des Smart-TV (1) für eine längere Zeit erfordert.

2. Der Fernwartungsverfahren nach Anspruch 1, wobei die Parameter Zeitinformationen zum Ausführen der Routine umfassen.

3. Der Fernwartungsverfahren nach Anspruch 2, wobei die Zeitinformationen eine Startzeit umfassen, zu der die Routine ausgelöst wird.

4. Der Fernwartungsverfahren nach Anspruch 2 oder 3, wobei die Zeitinformationen ferner eine Endzeit umfassen, wenn die Routine abgeschlossen sein wird, oder eine Dauer, für die die Routine auf dem Smart-TV (1) ausgeführt wird.

5. Der Fernwartungsverfahren nach einem der Ansprüche 2 bis 4, wobei die Zeitinformationen gemäß einer Anfrage bestimmt werden, die von dem Benutzer des Smart-TV (1) übermittelt wird.

6. Der Fernwartungsverfahren nach einem der vorhergehenden Ansprüche, wobei die Parameter ferner während der Routine zu überwachende Protokolltypen umfassen.

7. Der Fernwartungsverfahren nach Anspruch 6, wobei die Protokolltypen mindestens eines von Audio, Video, Sendung, Anwendung und Menü umfassen.

8. Der Fernwartungsverfahren nach einem der vorhergehenden Ansprüche, wobei die Parameter ferner einen oder mehrere der folgenden Ansätze umfassen: Art der Benachrichtigung, automatische Fernzugriffspräferenz und eine Benachrichtigungsnachricht, die bereitgestellt werden soll, wenn die Routine abgeschlossen ist.

9. Der Fernwartungsverfahren nach einem der vorhergehenden Ansprüche, wobei das Verfahren ferner vor dem Auslösen der Routine das Abfragen der Erlaubnis des Benutzers umfasst, die Routine auf dem Smart-TV (1) (107) durchzuführen .

10. Der Fernwartungsverfahren nach einem der vorhergehenden Ansprüche, wobei die Routine abgeschlossen ist, wenn mindestens ein Fehler bezüglich des Problems zu einer bestimmten Endzeit oder am Ende einer Ser-Dauer erfasst wird.

11. Der Fernwartungsverfahren nach einem der vorhergehenden Ansprüche, wobei der Server von einem Techniker betrieben wird.

12. Ein Fernwartungssystem, das einen Smart-TV (1) mit einer Front-End-Anwendung (2) und einen entfernten Server (3) mit einer Back-End-Anwendung (4) umfasst, wobei die Anwendungen konfiguriert sind für: eine Fernzugriffssitzung zwischen dem Smart-TV (1) und dem Fernserver (3) zu starten; dem Server (3) ein Problem bezüglich des intelligenten Fernsehers (1) zu übermitteln; dem eingereichten Problem eine Kategorie zuzuweisen, wobei die zugewiesene Kategorie angibt, ob eine sofortige Wartung oder eine aufgeschobene Wartung an dem Smart-TV (1) durchzuführen ist; wenn die zugewiesene Kategorie eine verzögerte Wartung angibt, am Server (3) mindestens eine verzögerte Wartungsroutine zu erstellen, indem Parameter für die Routine eingestellt werden; die Parameter vom Server (3) an das Smart-TV (1) zu senden; zum Auslösen der mindestens einen verzögerten Wartungsroutine auf dem Smart-TV (1) gemäß empfangenen Parametern; den Benutzer des Smart-TV (1) über die Ergebnisse (109) zu informieren; und Protokolldateien, die während der Routine erhalten wurden, an den Server (3) zu melden, wenn die Routine abgeschlossen ist. Zur Vervollständigung, wobei dem Problem eine aufgeschobene Wartungskategorie zugeordnet wird, wenn es erforderlich ist, das Smart-TV (1) über einen längeren Zeitraum zu überwachen.

13. Ein Computerprogramm mit Anweisungen zum Durchführen eines Verfahrens nach einem der Ansprüche 1 bis 1.

## Revendications

1. Procédé de maintenance à distance pour une télévision intelligente (1), le procédé comprenant :
démarrer une session d'accès à distance (101) entre la télévision intelligente (1) et un serveur distant (3) connecté à la télévision intelligente;
soumettre, au serveur (3), un problème relatif à la télévision intelligente (1) (102) ;
attribuer une catégorie à la question soumise (103), la catégorie attribuée indiquant si une maintenance instantanée ou une maintenance différée doit être effectuée sur la télévision intelligente (1);
si la catégorie attribuée indique un entretien différé (104), créer, au niveau du serveur (3), au moins une routine d'entretien différé (105) en définissant des paramètres pour la routine;
envoyer lesdits paramètres du serveur (3) à la télévision intelligente (1) (106) ;
déclencher l'au moins une routine de maintenance différée sur la télévision intelligente (1) (108) selon les paramètres reçus;
notifier à l'utilisateur de la télévision intelligente (1) les résultats (109); et
rapporter les fichiers journaux obtenus pendant la routine au serveur (3) (110) lorsque la routine est terminée;
dans lequel une catégorie de maintenance différée est attribuée au problème si le problème nécessite la surveillance de la télévision intelligente (1) pendant une période prolongée.

2. Procédé de télémaintenance selon la déclaration 1, dans lequel les paramètres comprennent des informations de synchronisation pour l'exécution de la routine.

3. Procédé de télémaintenance selon la déclaration 2, dans lequel les informations temporelles comprennent une heure de début à laquelle la routine sera déclenchée.

4. Procédé de maintenance à distance selon la déclaration 2 ou 3, dans lequel les informations de synchronisation comprennent en outre une heure de fin à laquelle la routine sera achevée ou une durée pendant laquelle la routine sera exécutée sur la télévision intelligente (1).

5. Procédé de maintenance à distance selon l'une quelconque des déclarations 2 à 4, dans lequel les informations de synchronisation sont déterminées en fonction d'une demande soumise par l'utilisateur de la télévision intelligente (1).

6. Procédé de télémaintenance selon l'une quelconque des déclarations précédentes, dans lequel les paramètres comprennent en outre des types de journaux à surveiller pendant la routine.

7. Procédé de télémaintenance selon la déclaration 6, dans lequel les types de journaux comprennent
au moins l'un des types suivants : audio, vidéo, diffusion, application et menu.

8. Procédé de télémaintenance selon l'une quelconque des déclarations précédentes, dans lequel les paramètres comprennent en outre un ou plusieurs des éléments suivants : type de notification, préférence d'accès à distance automatique, et message de notification à fournir lorsque la routine est terminée.

9. Procédé de télémaintenance selon l'une quelconque des déclarations précédentes, dans lequel le procédé comprend en outre, avant de déclencher la routine, la demande de la permission de l'utilisateur d'exécuter la routine sur la télévision intelligente (1) (107).

10. Procédé de télémaintenance selon l'une quelconque des déclarations précédentes, dans lequel la routine est terminée lorsqu'au moins un défaut concernant le problème est détecté, à une heure de fin spécifiée, ou à la fin d'une durée de série.

11. Procédé de télémaintenance selon l'une quelconque des déclarations précédentes, dans lequel le serveur est exploité par un technicien.

12. Système de maintenance à distance comprenant une télévision intelligente (1) avec une application frontale (2), et un serveur distant (3) avec une application dorsale (4), lesdites applications étant configurées pour :
démarrer une session d'accès à distance entre la télévision intelligente (1) et le serveur distant (3) ;
soumettre, au serveur (3), un problème relatif à la télévision intelligente (1);
attribuer une catégorie à la question soumise, la catégorie attribuée indiquant si une maintenance instantanée ou une maintenance différée doit être effectuée sur la télévision intelligente (1) ;
créer, au niveau du serveur (3), si la catégorie attribuée indique une maintenance différée, au moins une routine de maintenance différée en définissant des paramètres pour la routine ;
envoyer lesdits paramètres du serveur (3) à la télévision intelligente (1) ;
déclencher l'au moins une routine de maintenance différée sur la télévision intelligente (1) en fonction des paramètres reçus ;
informer l'utilisateur de la télévision intelligente (1) des résultats (109) ; et ; et
rapporter les fichiers journaux obtenus pendant la routine au serveur (3) lorsque la routine est terminée.
Complet, dans lequel une catégorie de maintenance différée est attribuée au problème si celui-ci nécessite la surveillance de la télévision intelligente (1) pendant une période prolongée.

13. Programme d'ordinateur comprenant des instructions pour exécuter un procédé selon l'une quelconque des déclarations 1 à 1.
